# EUROPÄISCHE PATENTSCHRIFT

(11) **EP 1 522 779 B1**
(45) Veröffentlichungstag und Bekanntmachung des Hinweises auf die Patenterteilung: **29.08.2007**
(21) Anmeldenummer: 04023707.5
(22) Anmeldetag: 05.10.2004
(51) Int. Cl.: F16K 31/163

(54) **Kryogenes Ventil mit einem Hebelantrieb**
Cryogenic valve with a lever actuator
Soupape cryogénique avec un dispositif d'entraînement du levier

(30) Priorität: 10.10.2003 DE 10347127
(43) Veröffentlichungstag der Anmeldung: 13.04.2005
(73) Patentinhaber: Linde Aktiengesellschaft, 65189 Wiesbaden (DE)
(72) Erfinder: Berghoff, Rudolf Erwin, Dr., 22088 Wedel (DE)
(74) Vertreter: Kasseckert, Rainer

(56) Entgegenhaltungen:
- FR-A- 852 211
- GB-A- 853 148
- US-A- 2 490 555
- US-A- 3 260 496
- US-A- 3 684 237
- US-A- 3 765 438
- US-A- 3 970 280
- US-A- 5 074 325
- US-A- 5 078 180
- US-A- 5 967 486

## Beschreibung

Die Erfindung betrifft einen kryogenes Ventil zur Abgabe eines Kryogenen Mediums mit einen Betätiger und einem pneumatischen Zylinder.

Ein Ventil dieser Art ist aus der Druckschrift US 3260496 bereits bekannt.

Bekannt sind verschiedene mechanische, elektrische oder pneumatische Betätiger für ein Ventil. Die bekannten Lösungen sind allerdings wenig zur Betätigung eines kryogenen Ventils geeignet, d. h. zur Betätigung eines Ventils, das ein kryogenes Medium, wie z. B. tiefkaltes verflüssigtes Gas, abgibt.

Betätiger dieser Art sind aus den Druckschriften US 5074325, US 2490555 und FR 852211 bereits bekannt.

Der Erfindung liegt daher die Aufgabe zugrunde, einen Betätiger für ein kryogenes Ventil zur Verfügung zu stellen, der einfach herzustellen und zuverlässig zu betreiben ist.

Die gestellte Aufgabe wird dadurch gelöst, dass der pneumatische Zylinder über einen Hebel mit der Ventilnadel in Wirkverbindung steht, wobei der Hebel an einer Seite drehbar mit einem Gestänge verbunden ist.

Die Erfindung ermöglicht eine räumliche Trennung der Pneumatik von dem Ventil, so dass kein Kälteübertrag von dem kryogenen Ventil auf die pneumatischen Teile stattfinden kann. Dadurch wird sichergestellt, dass die pneumatischen Teile in etwa der Raumtemperatur ausgesetzt sind. Die Vermeidung der Exposition der Pneumatik an sehr kalte Temperaturen verhindert Verschleißeffekte durch thermische Spannungen in den Bauteilen und stellt einen zuverlässigen Betrieb der Pneumatik und somit der Ventilbetätigung sicher. Diese Ausführung des erfindungsgemäßen Betätigers benötigt einen doppelt wirkenden pneumatischen Zylinder, der beim Ausfahren in die eine Richtung das Ventil öffnet und beim Ausfahren in die andere Richtung (Einfahren) das Ventil schließt.

In einer Ausführungsform ist das Gestänge selbst drehbar gelagert. Dies hat den Vorteil, dass beim Ein- und Ausfahren des Pneumatikzylinders eine kleine Relativbewegung des Gestänges an sich möglich ist und dadurch eine Kippwirkung auf das Ventil verhindert wird. Während eine starre Befestigung des Gestänges bei kleinen Ventilbewegungen oder kleinen Winkelbewegungen des Hebels noch tolerierbar ist, erlaubt die Drehbarkeit größere Bewegungen.

In einer bevorzugten Ausführung der Erfindung kann der Hebel mit einer Feder verbunden sein. Die Feder kann bevorzugt an der anderen Seite des Hebels - also gegenüber dem Gestänge - befestigt sein. Mit Verwendung einer Feder kann als pneumatischer Zylinder ein einfach wirkender pneumatischer Zylinder eingesetzt werden, der dann nur für das Öffnen des Ventils sorgt. Zum Schließen des Ventils wird er druckfrei geschaltet und die Feder zieht durch Ihre Spannkraft das Ventil wieder in die Schließstellung. Dies hat die Vorteile, dass ein preisgünstigeres pneumatisches Bauteil verwendet werden kann und dass der Anliegedruck der Ventilnadel im Ventilsitz durch die Feder exakt vorbestimmt werden kann.

In einer bevorzugten Ausführung der Erfindung sind das Ventil, der pneumatische Zylinder und das Gestänge - und ggf. die Feder - nebeneinander stehend angeordnet und greifen gemeinsam auf den Hebel zu. Die nebeneinander stehende Anordnung der Elemente führt zu einer kurzen Bauhöhe, die gerade beim Einsatz in kryogenen Umgebungen vorteilhaft ist.

In einer bevorzugten Ausführung der Erfindung stehen der pneumatische Zylinder - und ggf. die Feder- auf einer Seite des Ventils, während das Gestänge auf der anderen Seite des Ventils angeordnet ist. Dies führt beim Öffnen und Schließbewegungen zu einer Untersetzung, da das Ventil nun zwischen dem pneumatischen Zylinder und dem Gestänge 6 angeordnet ist, so dass eine Ausfahrbewegung des pneumatischen Zylinders zu einer kleineren Öffnungsbewegung im Ventil führt. Diese Untersetzung erlaubt eine äußerst feine Bewegung des Ventilkopfes im Ventilsitz und führt zu einer sehr exakten Dosierung.

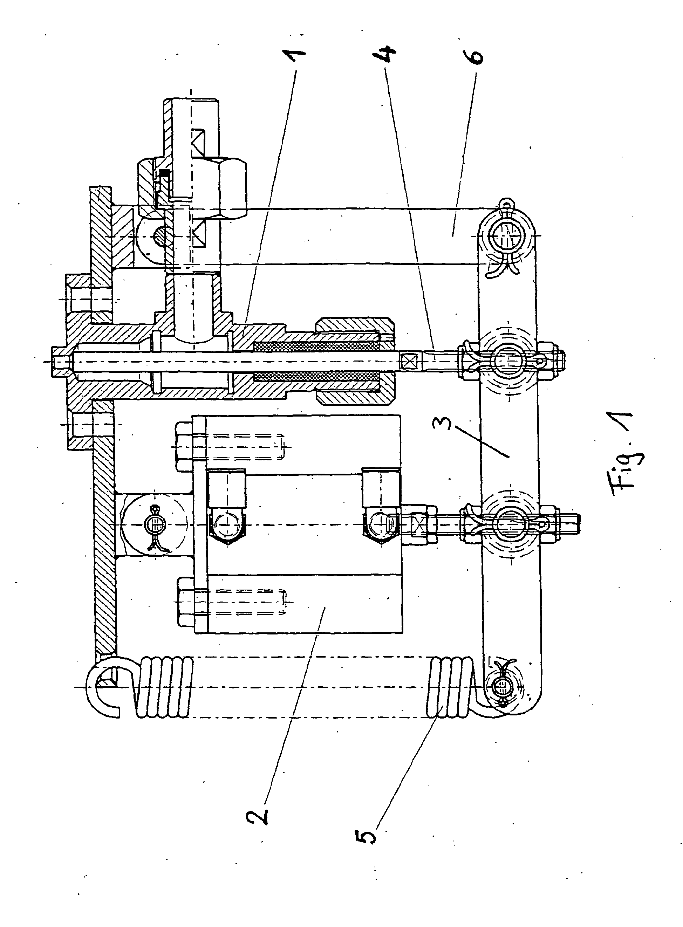

Die Erfindung sowie weitere Einzelheiten der Erfindung werden im Folgenden anhand eines in den Figuren schematisch dargestellten Ausführungsbeispiels näher erläutert. Hierbei zeigen die
- Figur 1: einen erfindungsgemäßen Betätiger mit einem kryogenen Ventil in geschlossener Ventilstellung

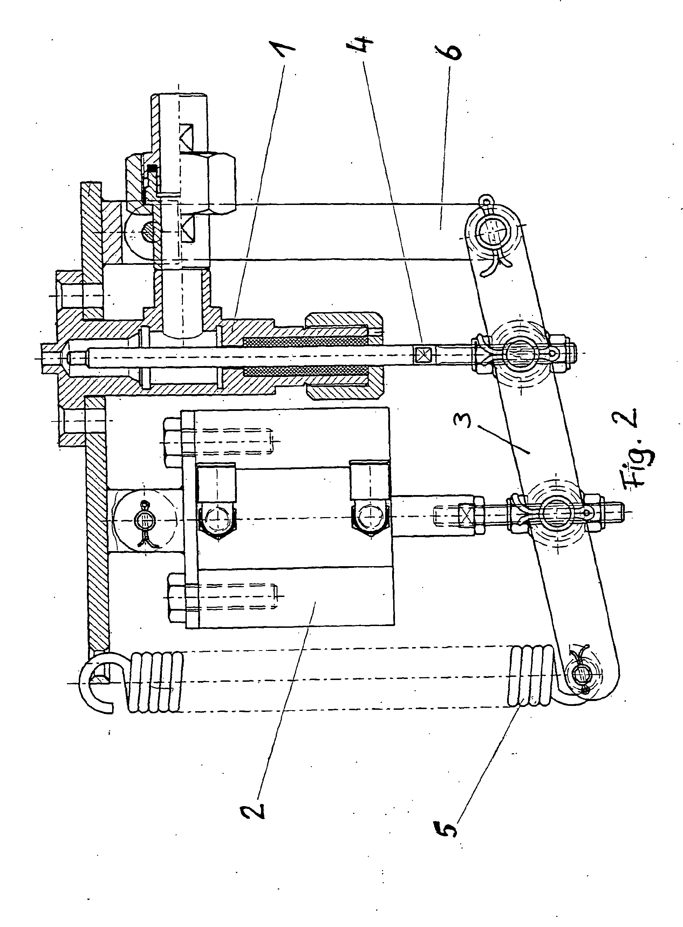

- Figur 2: einen erfindungsgemäßen Betätiger mit einem kryogenen Ventil in offener Ventilstellung

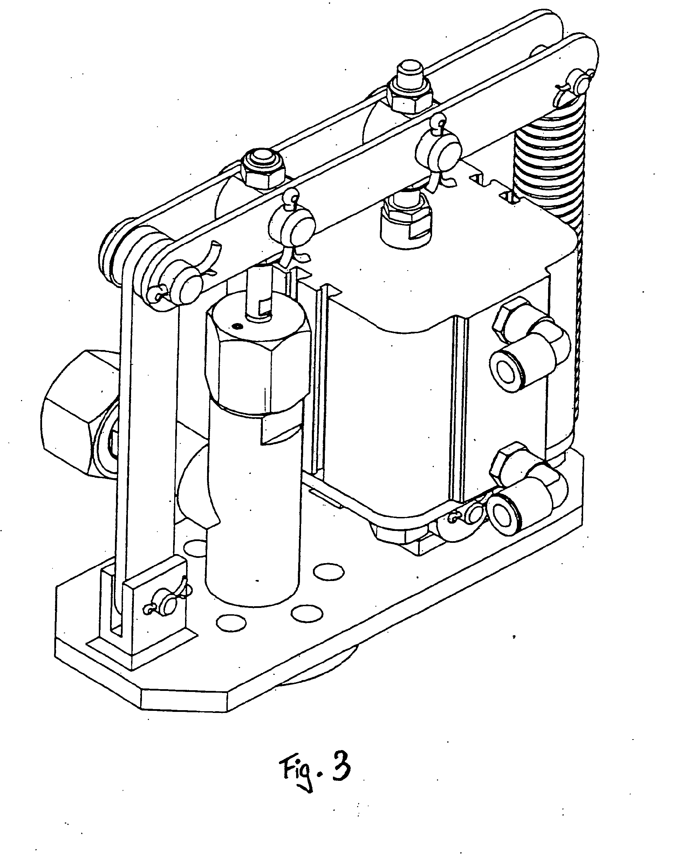

- Figur 3: eine isometrische Darstellung des erfindungsgemäßen Betätigers mit kryogenem Ventil

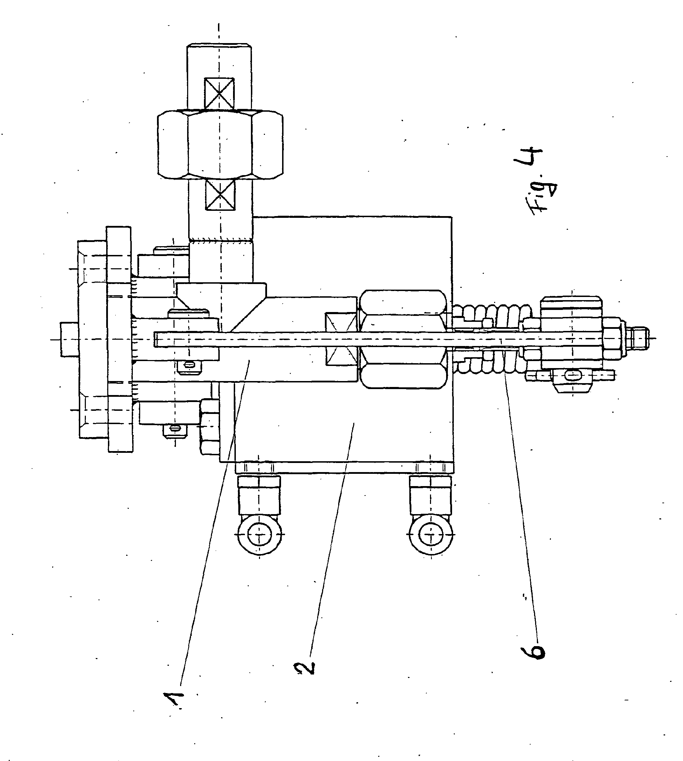

- Figur 4: eine Seitenansicht des erfindungsgemäßen Betätigers mit kryogenem Ventil

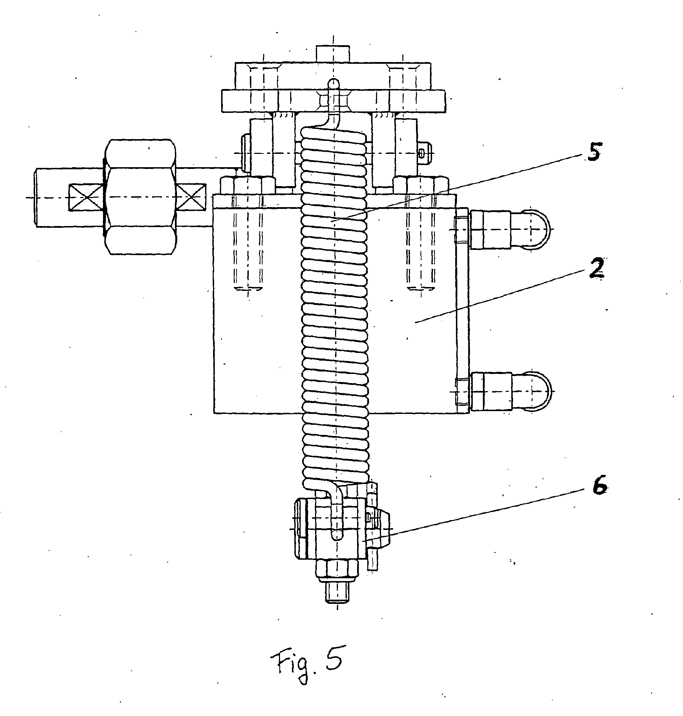

- Figur 5: eine weitere Seitenansicht des erfindungsgemäßen Betätigers mit kryogenem Ventil

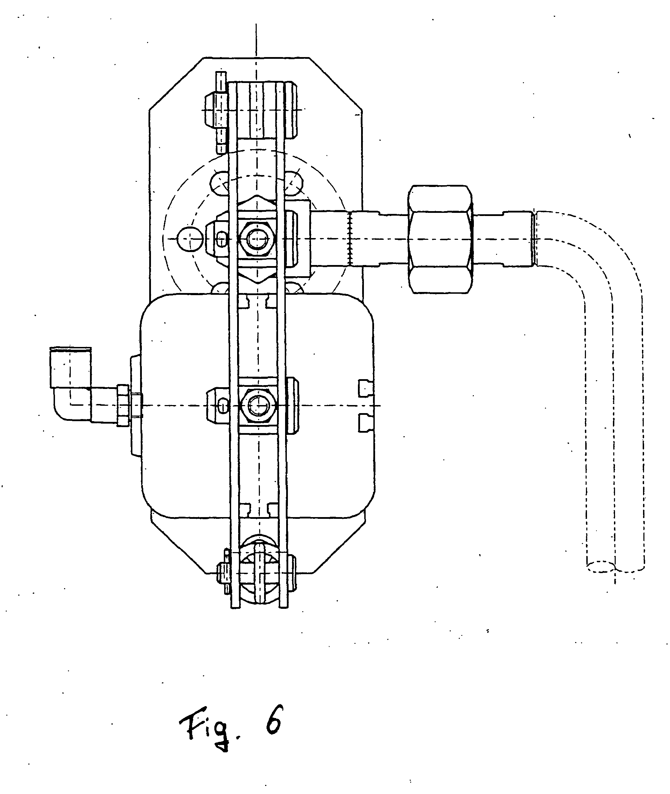

- Figur 6: eine Draufsicht des erfindungsgemäßen Betätigers mit kryogenem Ventil

Die Figuren zeigen einen Betätiger für ein kryogenes Ventil 1 mit einem pneumatischen Zylinder 2. Der pneumatische Zylinder 2 ist über einen Hebel 3 mit der Ventilnadel 4 verbunden, wobei der Hebel 3 an einer Seite mit einer Feder 5 verbunden ist und an der anderen Seite drehbar mit einem drehbar gelagerten Gestänge 6 verbunden ist.

Durch Ausfahren des Kolbens des pneumatischen Zylinders 2 wird die Feder 5 gedehnt, die Ventilnadel 4 wird zurückgezogen und das Ventil 1 wird in die offene Ventilstellung gebracht. Das kryogenen Medium kann in dieser Stellung vom Ventil abgegeben werden.

Zur Schließung des Ventils 1 wird die Rückstellkraft der Feder 5 benutzt, die Ventilnadel 4 bewegt sich in Richtung Ventilsitz und schließt das Ventil 1. Die Abgabe von kryogenem Medium ist damit unterbunden, das Ventil 1 ist geschlossen.

Die Ausführungsform ohne Feder ist hier nicht gezeigt. Sie unterscheidet sich von der gezeigten Ausführung dadurch, dass die Feder 5 weggelassen ist und der pneumatische Zylinder 2 ein doppelt wirkender Zylinder ist. Der Hebel 3 kann dann selbstverständlich kürzer ausgebildet sein. Öffnen und Schließen erfolgt durch Verfahren des Kolbens des pneumatischen Zylinders 2 nach oben oder nach unten.

## Patentansprüche

1. Kryogenes Ventil (1) zur Abgabe eines kryogenen Mediums mit einem Betätiger und einem pneumatischen Zylinder (2), **dadurch gekennzeichnet, dass** der pneumatische Zylinder (2) über einen Hebel (3) mit der Ventilnadel (4) in Wirkverbindung steht, wobei der Hebel (3) an einer Seite drehbar mit einem Gestänge (6) verbunden ist.

2. Kryogenes Ventil nach Anspruch 1, **dadurch gekennzeichnet, dass** das Gestänge (6) drehbar gelagert ist.

3. Kryogenes Ventil nach Anspruch 1 oder 2, **dadurch gekennzeichnet, dass** der Hebel (3) - bevorzugt an seiner anderen Seite - mit einer Feder (5) verbunden ist.

4. Kryogenes Ventil nach einem der vorhergehenden Ansprüche, **dadurch gekennzeichnet, dass** das Ventil (1), der pneumatische Zylinder (2), das Gestänge (6) und gegebenenfalls die Feder (5) nebeneinander stehend angeordnet sind.

5. Kryogenes Ventil nach einem der vorhergehenden Ansprüche, **dadurch gekennzeichnet, dass** der pneumatische Zylinder - und ggf. die Feder (5) - auf einer Seite des Ventils (1) und das Gestänge (6) auf der anderen Seite des Ventils (1) angeordnet sind.

## Claims

1. Cryogenic valve (1) for dispensing a cryogenic medium comprising an actuator and a pneumatic cylinder (2), **characterized in that** the pneumatic cylinder (2) is in an operative connection with the valve needle (4) by way of a lever (3), with the lever (3) being rotatably connected on one side with a linkage (6).

2. Cryogenic valve according to Claim 1, **characterized in that** the linkage (6) is rotatably disposed.

3. Cryogenic valve according to Claim 1 or 2, **characterized in that** the lever (3) is connected with a spring (5), preferably at the other side of the lever (3).

4. Cryogenic valve according to one of the preceding Claims, **characterized in that** the valve (1), the pneumatic cylinder (2), the linkage (6) and optionally the spring (5) are arranged to be standing side-by-side.

5. Cryogenic valve according to one of the preceding Claims, **characterized in that** the pneumatic cylinder, and optionally the spring (5), are arranged on one side of the valve (1) and the linkage (6) is arranged on the other side of the valve (1).

## Revendications

1. Soupape cryogénique (1) pour délivrer un fluide cryogénique, comportant un actionneur et un cylindre pneumatique (2), **caractérisée en ce que** le cylindre pneumatique (2) est en liaison active avec une aiguille de soupape (4) par l'intermédiaire d'un levier (3), dans laquelle le levier (3) est relié sur un côté de façon rotative à une bielle (6).

2. Soupape cryogénique selon la revendication - 1, **caractérisée en ce que** la bielle (6) est montée de façon rotative.

3. Soupape cryogénique selon la revendication 1 ou 2, **caractérisée en ce que** le levier (3) est relié à un ressort (5) - de préférence sur son autre côté.

4. Soupape cryogénique selon l'une quelconque des revendications précédentes; **caractérisée en ce que** la soupape (1), le cylindre pneumatique (2), la bielle (6) et éventuellement le ressort (5) sont disposés l'un à côté de l'autre.

5. Soupape cryogénique selon l'une quelconque des revendications précédentes, **caractérisée en ce que** le cylindre pneumatique - et éventuellement le ressort (5) - est disposé sur un côté de la soupape (1) et la bielle (6) est située sur l'autre côté de la soupape (1).
